# EUROPEAN PATENT SPECIFICATION

(11) **EP 1 010 300 B1**
(45) Date of publication and mention of the grant of the patent: **04.10.2006**
(21) Application number: 98941439.6
(22) Date of filing: 26.08.1998
(51) Int. Cl.: H04L 12/40, H04Q 7/30, H04Q 11/04, H04J 3/16, H04B 7/26

(54) **DATA TRANSMISSION IN A CROSS-CONNECT DEVICE**
DATENÜBERTRAGUNG IN EINER QUERVERBINDUNGSVORRICHTUNG
TRANSMISSION DE DONÉES DANS UN DISPOSITIF D'INTERCONNEXION

(30) Priority: 26.08.1997 FI 973509
(43) Date of publication of application: 21.06.2000
(73) Proprietor: Nokia Corporation, 02150 Espoo (FI)
(72) Inventor: METSÄLÄ, Esa, FIN-02200 Espoo (FI); YLÄ-MELLA, Jarmo, FIN-01600 Vantaa (FI)
(74) Representative: Levlin, Jan Markus
(86) International application number: PCT/FI1998/000662
(87) International publication number: WO 1999/011029

(56) References cited:
- EP-A1- 0 622 919
- WO-A1-93/22859
- WO-A1-94/15298
- WO-A1-94/28644

## Description

The invention relates generally to cross-connect devices where data to be connected and other information is transferred between different parts of the device. Particularly the invention relates to a bus architecture applied in the data transfer between the parts of such a cross-connect device.

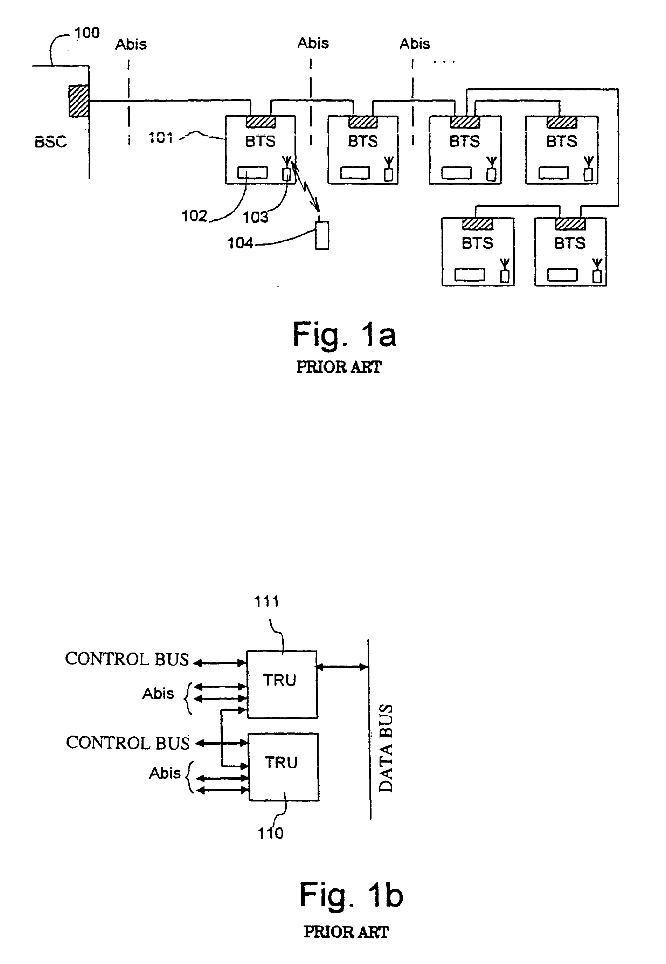

Figure 1a shows a base station network of a cellular system having a base station controller (BSC) 100 and a plurality of base transceiver stations (BTS) 101. Further the base station controller 100 is linked to a mobile services switching centre, not shown in the figure. In order to transfer data between the base station controller 100 and the base stations 101 they are interconnected by a number of transmission links, which form a so called transmission system in the base station network. The standards for a cellular system, for instance the GSM system (Global System for Mobile telecommunications), do not generally define the transmission method used in the base station network except for the functionality required by the method. In the GSM system the interface defined by the standard between two mobile stations or between a base station and a base station controller is called the Abis interface. The transmission method can be for instance a 2 Mbit/s or 1.5 Mbit/s PCM link (Pulse Coded Modulation; ITU-T G.703 and G.704), an SDH link (Synchronous Digital Hierarchy; ITU-T G.774.03), an ATM link (Asynchronous Transfer Mode; ETS 300 371), an ISDN link (Integrated Services Digital Network), an HDSL link (High Density Digital Subscriber Line). The physical link can be a conventional copper conductor, an optical cable or a microwave link.

In the base stations and the base station controller of the system shown in figure 1a the connection to the transmission system is made via a cross-connect device 102. The cross-connect device 102 of a base station can comprise one or more transmission units (TRU, TRansmission Unit). A cross-connection means that data which is supplied to the device realising the cross-connection and which is organised in frames can be connected in the device to an output direction so that the location of the data bits in the frames can be changed. The cross-connect device of the base station "drops" certain frame bits and time slots of the transmission system to be used by said base station, in other words, on one hand it directs to the base station information arriving in certain time slots and relating to said base station, and on the other hand it inserts the data from the base station towards the base station controller into certain time slots allocated to be used by said base station. The cross-connect device can also perform summing, copying or other operations on the input data before the data is switched into the output direction. When the cross-connect device is installed either in the same support structure ("rack") as the actual base station or in its immediate vicinity the base station forms a compact unit and the base station network can be easily modified and extended.

The data transmission capacity of the transmission system allocated to one base station depends on how many TRX units (Transmit/Receive) 103 it contains. The TRX units form the radio interface to the terminals 104, and the number of them determines how many simultaneous telephone or data calls a base station is able to transfer at the same time. Different parts of the base station network can also require transmission capacities of different magnitudes, depending on the topology of the base station network. In base station networks branched in a tree-like fashion the highest capacity is required by the links close to the base station controller.

The simplest transmission system is the so called point-to-point connection where a single GSM base station is directly connected to a base station controller and via it to an exchange. However, in the case of 2 Mbit/s PCM the traffic capacity required by a base station containing one TRX is quite low compared to the whole transmission band. Typically two and a half time slots of a PCM frame (6 to 8 speech channels and signalling) or 160 kbit/s are reserved for each TRX. Therefore a point-to-point connection often wastes capacity and will become expensive. On the other hand, for instance the use of existing ISDN connections may be attractive for point-to-point connections. The network can be secured by duplicating the point-to-point connections (redundant point-to-point).

The transmission bandwidth can be utilised more effectively by chaining the base stations (a so called multidrop-chain structure). A number of base stations in the chain share the same transmission medium in a time divided fashion whereby the capacity of the connection can be utilised more efficiently. Then the cross-connection functionality integrated in a base station does itself justice as the time slot arrangements can be made within the actual base station.

Loop networks are use in cases of secured networks. The base stations are interconnected to a ring, whereby there is always a transmission link from each base station to the BSC in both ring directions. In a normal situation either one of the intact links is connected. Status bits, so called pilot bits are used to monitor the condition of the network there are used, whereby each base station transmits pilot bits in both transmission directions of the ring. A changed status of the pilot bit indicates a net-damage, whereby the cross-connect devices of the base stations are connected to the standby link. The network synchronisation information is also transmitted via own status bits. A connection switch-over which is made as fast as possible enables the network to operate also in fault situations without the calls being disconnected. A GSM call tolerates a disruption of about 500 ms on the transmission link without the actual call being disconnected.

Figure 1b shows a prior art cross-connect device of a GSM base station. It contains two separate transmission units 110 and 111. "Outwards", that is towards the base station controller or to another base station (not shown in the figure), both transmission units have an Abis interface according to the GSM standards. Further both transmission units have an operation management link towards the base station controller. One of the transmission units has also a connection to the base station's internal data bus, through which the downlink data related to the call and signalling connections transferred by the base station is transmitted to the TRX units (not shown in the figure) of the base station, and correspondingly the uplink data from the TRX units is transmitted towards the base station controller via the data bus. In the prior art embodiment the transmission units 110 and 111 of the cross-connect device are completely separated, and each has its own internal cross-connect bus. The transmission units are interconnected via the Abis interface as shown in figure 1b.

Such a known cross connect device is disclosed in a publication WO 94/28644.

In future cellular systems the average cell size is smaller, and correspondingly the number of cells is higher than at present, whereby it must be possible to connect more base stations to the transmission systems and the network topologies and the cross-connections become still more complicated. The operator responsible for the transmission medium is not necessarily the same as the operator running the operation of the cellular system, whereby the last mentioned must be able to realise the transmission between the base stations and the base station controllers using the available data transmission facilities as advantageously and effectively as possible.

The object of this invention is to realise a cross-connection which is effective, operates reliably and can be easily modified.

The object of the invention is attained by a method according to claim 1, a cross-connect device according to claim 7 and a base station network according to claim 10.

In the inventive structure solution the functionality required by the transmission form all transmission links of a base station, but according to capacity requirements it is possible to add units to the base station equipment, whereby the units operate as one entity. The cross-connection between the transmission units is common via a parallel bus on a certain so called motherboard, which bus interconnects the transmission units and which most preferably is duplicated for security reasons. Regarding the control of the base station the transmission units form one controllable entity. Each transmission unit realises a standard transmission interface of a certain type.

When the amounts of GSM traffic increase there will also come a need to have transmission interfaces of different types in the same base station. Therefore it is possible to use transmission units of several different types in the new base station solution. A certain first part of a transmission unit realises the transmission interface and transforms the data to be cross-connected from the transmission mode used in the transmission system to the internal transmission mode of the cross-connect device. In this form the data to be cross-connected is written on the cross-connect bus interconnecting the transmission units. The other parts of a transmission unit comprise preferably at least the cross-connection, the unit control, the synchronisation to other transmission units, and the connections to the motherboard of the base station. A transmission unit can comprise one or more printed circuit boards. Below the term "specific part" refers to the parts realising the transmission interface, and the term "general part" refers to the cross-connection and bus interface block. In addition to the above mentioned functions a transmission unit can also contain other functional blocks.

The general parts of the transmission units are interconnected by a parallel bus which has a data section with the width of one byte, and further it has own lines for a clock signal and a frame marker, with the aid of which the operation of the bus is synchronised. The transmission units alternately write data on the parallel bus one byte at a time, so that one byte appears on the parallel bus during one clock period. The order in which the writing is made is called a frame structure. Certain regularly repeated writing turns are allocated to each transmission unit, so that the writing periods are repeated in the same form from one frame to the next one.

The frame structure according to the invention is made up of blocks which comprise time slots with the length of one byte. The number of blocks and bytes is chosen so that as good a compatibility as possible is achieved with the different transmission formats processed by transmission units. Each input connection to a transmission unit represents a block of the frame structure of the parallel bus, in other words the data input to the cross-connect device via said connection is written on the parallel bus into a block representing said connection. The time slots of one block will not occur sequentially on the parallel bus, but first there occur alternating the first time slots of all blocks, then the second time slots of all blocks, and so on. Further a block different from the other blocks can be used for monitoring the internal operation of the cross-connect device and for other particular purposes, whereby the time slots of this particular block occur in sequence on the cross-connect bus after all the other blocks.

A suitable amount of blocks and time slots provides a good compatibility between a certain input data interface and the capacity of the parallel bus allocated for it, in other words, the data can be written from the input interface to the parallel bus approximately at the same pace as it arrives at the cross-connect device, and there is not left too much unused parallel bus capacity. A minimum connection delay caused by the parallel bus is achieved by interleaving by bytes the writing of the blocks. The frame structure according to the invention has space for the transmission of actual payload traffic as well as for the internal cross-connect device control data, and it also enables future expansions of the functions. When the control data and the payload traffic pass in the same cross-connect bus the duplication of the bus at the same time secures that they both are transferred also in the most common fault situations. The frame structure also makes it possible to control the existence of different transmission units and also to transfer in the unoccupied capacity of the frame structure transmissions between a test transmitter and receiver.

The invention is described in more detail below with reference to preferred embodiments presented as examples and to the enclosed figures, in which
Figure 1a shows a known base station network,
Figure 1b shows a known cross-connect device of a base station,
Figure 2 shows the structure of a cross-connection of a base station where the invention can be applied,
Figure 3 shows a part of figure 2 in more detail,
Figure 4 shows another part of figure 2 in more detail,
Figure 5 shows a part of figure 4 in more detail,
Figure 6 shows how bus buffer circuits are used in connection with the invention,
Figure 7 shows how a clock signal and a frame marker is generated for the cross-connect bus,
Figure 8a shows a frame structure according to the invention.
Figure 8b shows the transmission order of the time slots of the frame structure according to the invention,
Figure 9 shows in more detail a part of figure 8a, and
Figure 10 shows a bus interface of a transmission unit.

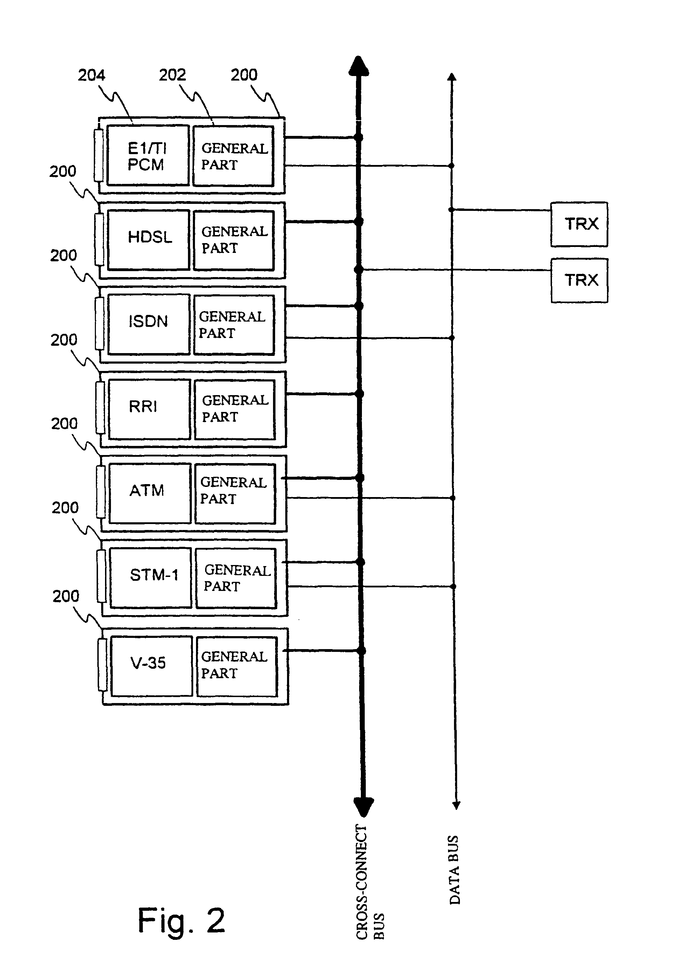

Figure 2 presents an example of the new structure of the cross-connect device of a base station. The cross-connect device has at least one transmission unit 200. It can also contain more transmission units, depending on the quality and number of the required transmission links. Each transmission unit 200 comprises a general part 202 and a specific part 204. In a preferred embodiment each transmission unit is mounted on one printed circuit board, on which there is realised the required physical connections as well as the functional means required by the general part 202 and the specific part 204. The transmission units are electrically connected to the internal duplicated cross-connect bus of the base station. The transmission units can also be connected to the data bus used by the base station's transmitter/receiver units or TRX's. In a typical embodiment where the TRX units are connected to the data bus, at least one transmission unit must be connected also to the data bus in order to enable data transmission via the transmission units between the TRX units and transmission links outside the base station. In other embodiments of the invention the TRX units can also be connected to the cross-connect bus.

In addition to the cross-connect buses and data buses shown in figure 2 also other buses can be realised in the base station for operative control and synchronisation of the transmission units. In such an embodiment the transmission units are also connected to such buses.

At least one external duplex transmission link 206 is connected to the specific part 204 of each transmission unit 200, and it can be for instance a PCM link, an SDH link, an ATM link, an ISDN link, an HDSL link, or another link. A specific part of the RRI type (Radio Relay Interface) is preferably directly connected to the external microwave radio unit of the base station. In the same cross-connect device there can be a similar external transmission link from the specific parts of all transmission units, or there may be different links. Further one transmission unit can be realised with connections for transmission links of two or more different types. It is worthwhile to arrange the data transmission between the specific part 204 and the general part 202 so that it is substantially similar in all transmission units, irrespective of the type of the external transmission link. An advantageous solution is to form N connections with a constant capacity (for instance 2048 Mbit/s) between the general part and the specific part, where the number N is chosen so that the transmission capacity between the specific part and the general part is at least as high as the total capacity of the transmission links connected to the specific part.

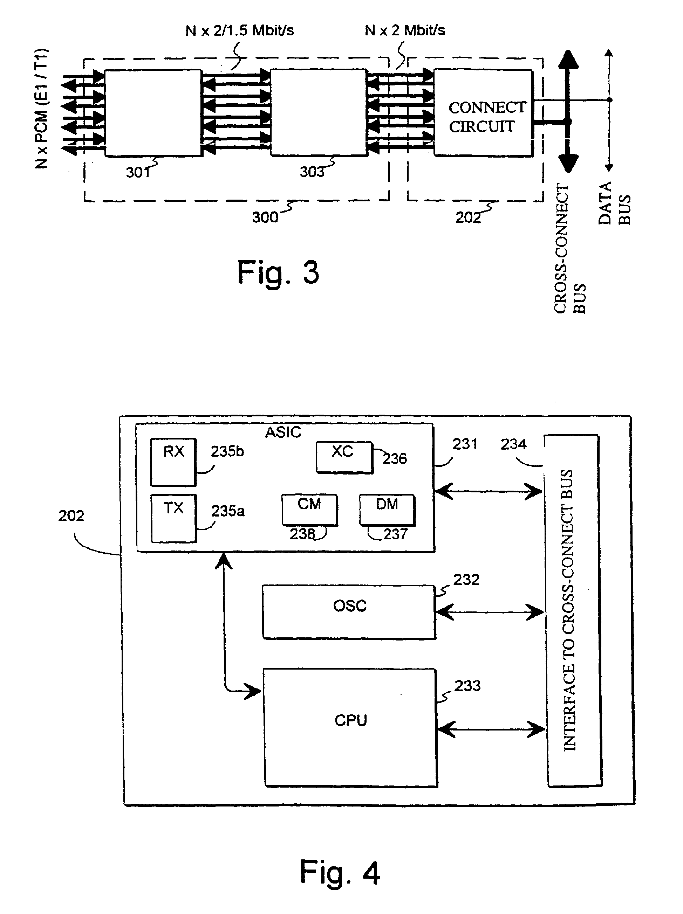

Figure 3 shows in more detail the specific part 300 of a transmission unit of a cross-connect device according to the invention, the specific part being intended for transmission and reception of a PCM signal. It has a line interface circuit 301 of N lines which during reception adapts to the received signal level and extracts and regenerates clock information from the data. The line impedance can be 75 Ω, 120 Ω (E1) or 100 Ω (T1), depending on the application. During transmission the line information circuit 301 electrically adapts the data to the actual transmission medium, which is a coaxial cable or a twisted-pair cable. The logical termination of the transmission line is realised by an N-channel framer circuit 303. In reception it performs the line decoding (for instance HDB3, High Density bipolar 3; AMI, Alternate Mark Inversion; or B8ZS, Binary 8 Zero Substitution) and aligns into the frame phase with the aid of frame alignment words in the data stream. Further the framer circuit 303 contains other functionalities, for instance for processing the overhead data; decoding of the channel signalling; processing of HDLC messages of the T1; processing of different alarm data; and so on. Finally the specific part provides the data stream towards the general part in a form where the clock has been extracted from the data to form a separate signal, and further the beginning of a frame is indicated by a signal of its own. In the output direction the above processes are performed in the opposite order.

Irrespective of whether the transmission interface is 2.048 Mbit/s (E1) or 1.554 Mbit/s (T1) the framer circuit 303 always presents an N x 2.048 Mbit/s interface towards the general part. This is made by an internal buffering of the framer circuit 303 and by placing the data of the connections between the framer circuit 303 and the general part 202 into an E1 framing structure, whereby the "extra" time slots of the E1 frame structure are stuffed with pseudo-data, if a lower capacity T1 frame structure is used in for the transmission. The same principle applies also to other applications of the specific part; the interface towards the general part is always N x 2.048 Mbit/s.

Figure 4 shows in a simplified way the basic electrical structure of the general part 202 of a transmission unit. The general part comprises a cross-connect circuit 231, which usually is an ASIC circuit (Application Specific Integrated Circuit) and which below is called a connect circuit. Further the general part comprises an oscillator 232, a microprocessor 233 and a cross-connect bus interface 234. The transmitter and receiver blocks 235a and 235b for the communication with the general part are located in the connect circuit 231, which further comprises i.a. a cross-connect processor 236, a data memory (DM) 237, and a control memory (CM) 238. The data memory 237 functions as an intermediate data storage, which temporarily stores the data passing via the connect circuit in the output direction or from the cross-connect bus to the transmitter blocks, in order to rearrange the data. The microprocessor 233 controls the operation of the whole general part.

The general part communicates via the cross-connect bus interface 234 with the cross-connect bus of the cross-connect device where the data appears in a form defined by a certain bus protocol. The data transferred on the cross-connect bus is arranged into certain frames with a regular form. Each frame appearing on the cross-connect bus is stored in its turn into the data memory DM of the cross-connect circuit 231. The cross-connect processor XC reads the data from the data memory DM, for instance one byte at a time, and writes the read data into the transmitter blocks 235a, which lead to the general part of the transmission unit. The smallest amount of data, the processing of which can be controlled independently of other data in connection with the writing operation, is called a granularity. If the granularity is one bit, then each bit read from the data memory DM and written into the transmitter blocks 235a can be controlled independently of the other bits. Instruction words read from the control memory CM determine in which order the data read from the data memory DM is written into the transmitter blocks 235a.

One prior art GSM speech connection occupies in the transmission system a capacity of 16 kbit/s, which corresponds to two bits in a PCM transmission system frame (according to the standards G.703 and G.704 the PCM frames are repeated 8000 time per second in the transmission system, so that one bit per frame corresponds to a capacity of 8 kbit/s). However, in a cross-connect device according to the invention it is advantageous to be prepared also for the so called half-rate GSM connections, of which each represents a transmission capacity of only 8 kbit/s. The granularity must be one bit, because it must be possible to process these connections in the cross-connect device independently of each other, and because it is also advantageous to be prepared for the transfer of the CAS signalling (Channel Associated Signalling) according to the standards G.703 and G.704 in the cross-connect devices.

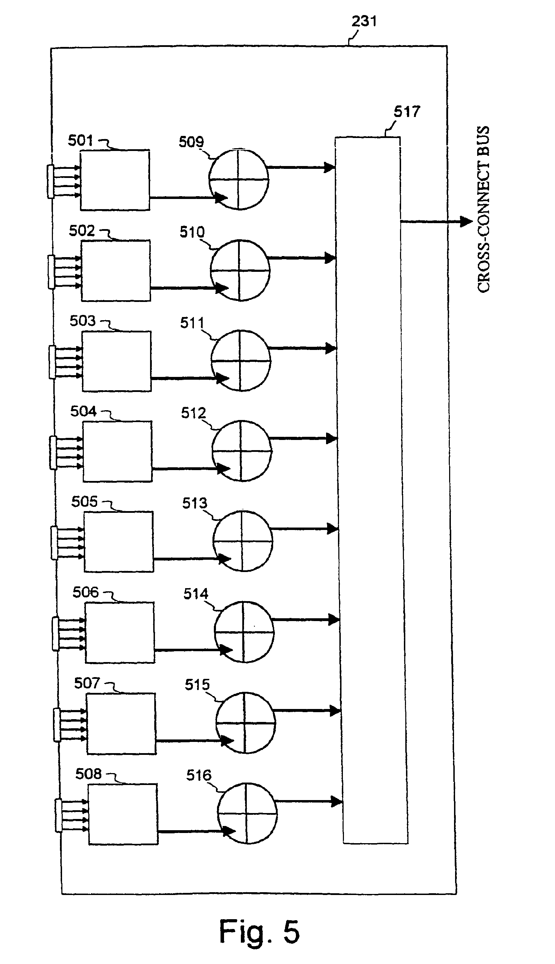

Figure 5 shows in a little more detail some internal blocks of the connect circuit 231. There can be a maximum of eight receiver interfaces 501 to 508, and each of them receives from the specific part (not shown in the figure) of the transmission unit serial data at a rate of 2.048 Mbit/s according to the G.703/G.704 E1 frame structure. Each receiver interface 501 to 508 performs on the received data a serial/parallel conversion with a width of eight bits and writes the data in a buffer memory (in other words, a so called ring memory) 509 to 516, which has a size of four E1 frames of G.703/G.704.

The purpose of the buffer memories is to equalise variations which are caused by any differences in rate and rhythm between the data reception and the writing to the cross-connect bus. Normally the data received via a certain receiver interface 501 to 508 is written into one quarter of a buffer memory 509 to 516 with the size of one G.703/G.704 E1 frame and corresponding to said receiver interface, and the data to be written on the cross-connect bus can be simultaneously read from another quarter of the same buffer memory. Pointers indicating the write and read positions in each buffer memory are controlled by a functionality constructed in the connect circuit so that they can not get too close to each other and cause an interference situation. If the reception rate is higher than the rate at which data is read from the buffer memory in order to be written on the cross-connect bus, then the write pointer can threaten to close in on the read pointer, whereby the pointer control performs a so called controlled slip forward, or jumps the read pointer one frame forward. Correspondingly, if the reception rate is slow compared to the read rate, then the control can perform a controlled slip backwards, or control the read pointer to read two times in a row a certain frame stored in the buffer memory.

In order to control the delay occurring in the data transmission it is advantageous if it is possible to select how large part of the buffer memories is used at the same time. If it desired to have the best possible tolerance against momentary variations occurring in the reception rate, then the buffer memories 509 to 516 should store as many frames as there is place for (above the value four frames was given as an example). However, then the delay is at its maximum. In order to minimise the delay it is possible to choose so that each of the buffer memories 509 to 516 store only one frame at a time, i.e. that the data read to the cross-connect bus is read from the same frame, which is currently being received and written into the buffer memory. This arrangement will tolerate almost no variations in the reception rate.

The buffer memories are connected to the internal cross connect bus interface 517 of the connect circuit, whereby this interface is not the same one as the cross-connect bus interface 234 in the general part shown in connection with figure 4. The internal cross-connect bus interface 517 of the connect circuit is programmed to read data from the buffer memories 509 to 516 one time slot (or byte) at a time in such an order, and thus synchronised to the clock signal of the cross-connect bus and to the frame marker, that when it has read a certain byte from the buffer memory of a certain receiver interface and written it into the data lines of the cross-connect bus via the cross-connect bus interface of the general part, then in the frame structure of the cross-connect bus this byte is exactly synchronised to a certain time slot of the block, which is allocated to the receiver interface in question. The technical realisation of the synchronisation is described later in more detail.

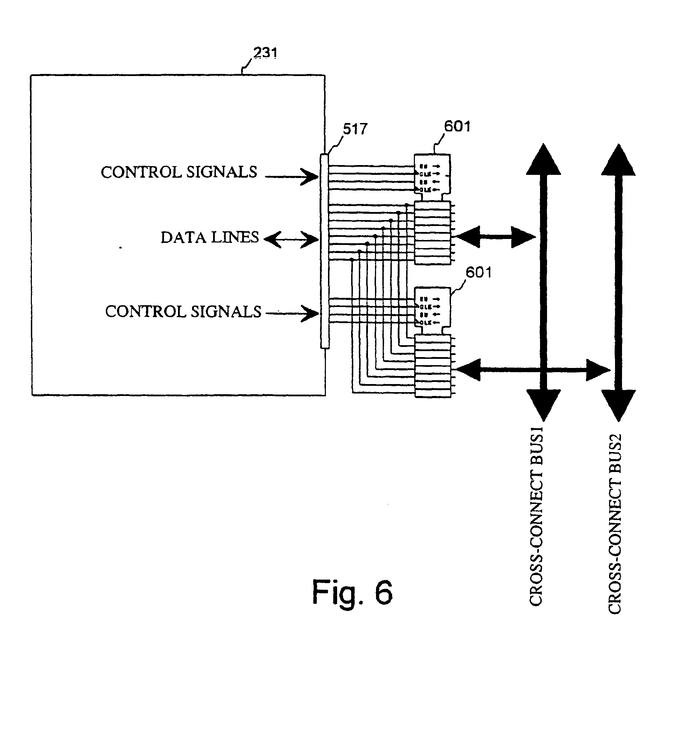

The cross-connect bus interface of the general part is most advantageously realised with buffer circuits, for instance with circuits of the type 74LVT652 as shown in figure 6. In order to duplicate the cross-connect bus it is advantageous to have two parallel such circuits 601 and 602 in each general part. The data lines from the internal cross-connect bus interface 517 of the connect circuit are branched to the data lines of both buffer circuits, but both buffer circuits receive own control signals from the connect circuit. Only one buffer circuit at a time is in operation, whereby the other buffer circuit is in stand-by.

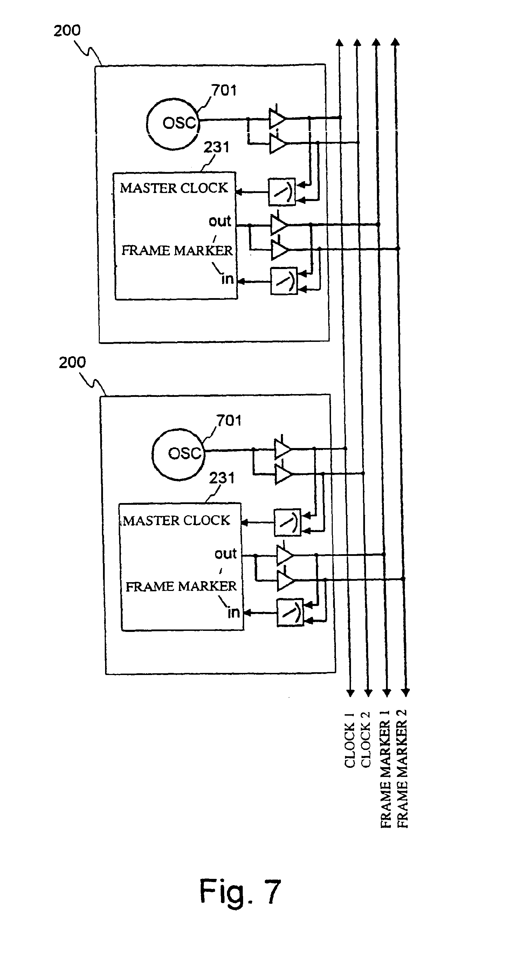

Figure 7 shows how the clock signal and the frame marker, i.e. the frame alignment signal, are generated to the cross-connect bus. Each transmission unit 200 contains an oscillator 701 and is able to generate a 16.384 MHz clock signal for the cross-connect bus. However, only that transmission unit indicated as bus master is allowed to send the clock signal to the bus. The control software of the whole cross-connect device ensures that there can not appear two masters simultaneously, and that no bus conflicts will occur. Each transmission unit, also the transmission unit acting as master, always take the 16.384 MHz clock signal via the bus, whereby, it is possible to ensure that the clock frequency of the system's connect circuits and in addition also the clock phase will be global within certain tolerances due to individual differences.

A frame marker is used to detect the bit phase of the cross-connect bus. Also this marker is conveyed in one line of the motherboard connecting the transmission units 200, and each transmission unit is able to generate also a frame marker as well as the clock signal. Typically the same unit which generates the bus clock signal also generates the frame marker. However, this is not necessary. The frame marker is generated in the connect circuit 231. It is generated in a random fashion from the 16.384 MHz master clock supplied to the circuit, so that an 1-active pulse appears during one clock period (61 ns) at intervals of the frame period of the cross-connect bus (for instance at intervals of 125 ###seconds). Each connect circuit generates said signal continuously at its frame marker output pin. The signal output to the bus is enabled or disabled by an external three-state buffer. Each circuit also takes the frame marker from the bus, and then the marker after input buffering is connected to the frame marker input pin of the connect circuit. By using separate input and output pins for the frame marker in the connect circuit, and by circulating the signal via the bus, it is also made sure that the frame marker appears almost simultaneously both at the master transmission unit and at all those transmission units which are in the slave position. When an input frame marker signal is interpreted as active it indicates that the last byte of the whole frame is passing on the cross-connect bus. For security reasons both the clock signal and the frame marker are duplicated on the motherboard. The selection of the line to be used is made outside of the connect circuit. It is possible to switch over to the standby line if there is a suspicion about a driver fault or a film break on the motherboard.

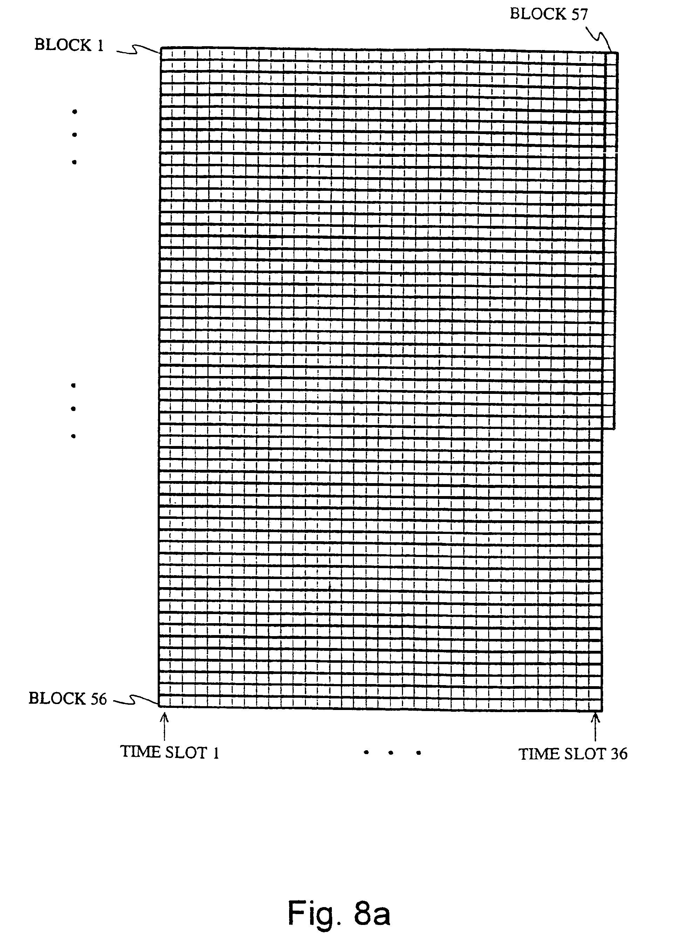

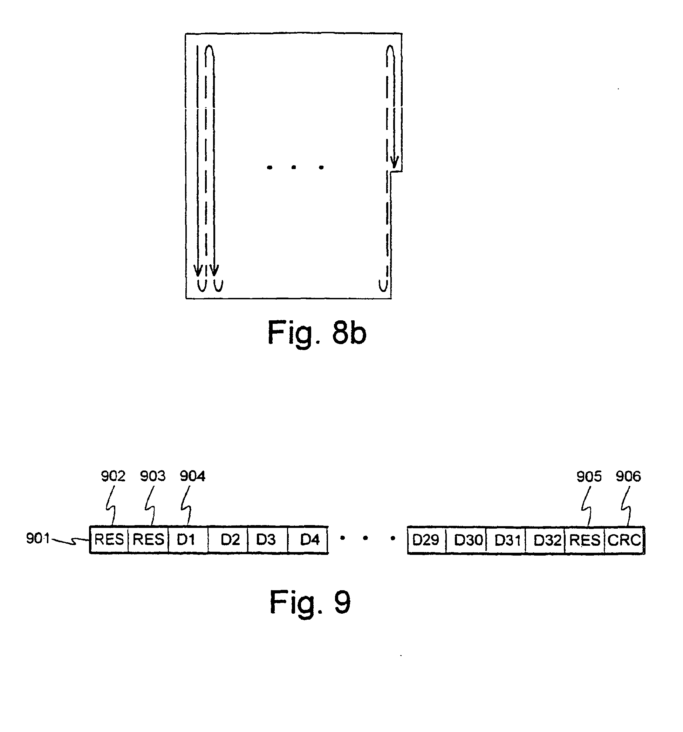

Figure 8a shows a preferred embodiment of the frame structure of the cross-connect bus belonging the bus architecture according to the invention. In this case the frame structure contains 57 blocks, of which each block 1 to 56 contains 36 time slots and the block 57 contains 32 time slots. The time slots are also often called bytes, because during one time slot the cross-connect bus transfers one byte of information. However, as a logical unit a "time slot" means a certain part of the cross-connect bus frame structure, during which the cross-connect bus can transfer one byte of information. The frame structure does not require all time slots to be in use, but it may happen that during some time slots the cross-connect bus does not transfer any information at all. In figure 8a the blocks 1 to 56 are shown as horizontal rows formed by the time slots, but the block 57 is shown as a vertical column formed by time slots. The order of presentation tells in which order the bytes placed in the time slots of the frame structure appear on the cross-connect bus. The order of appearance regarding figure 8a is "from top to bottom, from left to right", in other words, the turn comes first to the byte located in the first time slot of block 1, then to the byte located in the first time slot of block 2, and so on until after the first byte of block 56 the turn comes to the byte located in the second time slot of block 1, the byte located in the second time slot of block 2, and so on. Last in the frame there appear on the cross-connect bus the bytes located in the time slots of block 57 from the first byte to the 32nd byte. The order of appearance of the time slots on the cross-connect bus is illustrated by arrows in figure 8b.

There are a total of 2048 time slots in the frame structure according to the figure 8a. If the clock frequency of the bus is the above mentioned 16.384 MHz and the length of one time slot is the same as one clock period (about 61 ns), then the frame period or the total length of all time slots in the frame is about 125 µs, and the frame frequency is 8 kHz, which means that the frame structure is cyclically repeated 8000 times per second on the cross-connect bus in a similar form. The frame structure corresponds well to the transmission interface between the specific part and the general part of the transmission unit described above, so that the rate of a single interface is 2.048 Mbit/s and the E1 frame comprises 32 time slots with a size of one byte. Each single input interface (from the specific part towards the general part) can be set to correspond to one block of the frame structure of the cross-connect bus. 32 bytes of the 36 bytes in a block can be used to transport that data which comes from one input interface in one E1 frame. The other four bytes of the block can be reserved for different control purposes and for future extensions of the system.

Figure 9 shows in more detail a block 901 and the bytes placed in its time slots. According to the preferred embodiment shown here the first two time slots 902 and 903 of the block 901 are allocated to data transmission when the basic unit in the input interface is some other than the E1/T1 frame containing 32 bytes; for instance 36 bytes per block are required to transmit the VC-12 units of the SDH system, which is described in more detail later. A reservation for other data transmission is indicated by the abbreviation RES (reserved). From the third time slot 904 onwards the consecutive time slots contain data bytes, which have arrived via a certain input interface in one E1 frame. The next to last byte 905 is again reserved, and the last byte 906 of the block is a check sum calculated by the CRC method (Cyclic Redundancy Check) from the previous data bytes. The CRC check sum is intended for detection of any transmission errors occurring on the cross-connect bus. When a connect circuit transmits data to the bus it calculates from certain bytes of each block (for instance from 32 data bytes) a CRC-4 check sum so that the ordinal number of the block in question is always added as an 8-bit number at the beginning of the processed byte sequence. For instance considering transmission to block 5 the CRC-4 calculation is begun with the bit pattern '00001001' (binary expression of the number 5) and the calculation is continued for instance from the time slot containing the first data byte. The CRC-4 check sum is transferred on the bus in a byte reserved for it (byte 906 in figure 9).

Correspondingly, when data is received from the cross-connect bus the CRC-4 check sum is calculated using the block number and it is compared with the received CRC-4 check sum. The method detects both single bit errors and any confusion in block numbers; in the latter case a different seed byte has been used to calculate the CRC-4 at the transmission and at the reception, and thus the words do not match. When the check sum calculation has detected an error in reading from the cross-connect bus the connect circuit which read the erroneous data can act in different ways in order to reduce the effects of the error. Assuming that the error was not a random one but is repeated in the next frame, then during the next frame the connect circuit in question does not write the data arriving from the cross-connect bus in the erroneous block to the data memory but replaces it with a fixed '1'. Then a fixed '1' signal appears on the output line. Then one frame of erroneous data can pass through the system, because the CRC-4 calculation is made only at the end of a frame. Then the data of the frame in question is already in the data memory of the connect circuit. However, this is of no significance, because only a few bits per channel can pass through. Above we discussed only the CRC-4 method in connection with the check sum calculation, but it is obvious that also other methods known per se can be used for the calculation of the check sum.

There is a particular advantage in using a check sum in all the first 56 blocks, because then one definition can take care of the securing of many different kinds of data on the cross-connect bus. Thus the transmission units can transfer from the transmission system to the cross-connect bus also other payload traffic than only the traffic transmitted or received by terminals. If any block of the cross-connect bus contains important control information regarding the cross-connect device or other parts of the base stations, then the CRC check sum belonging to a block helps to transfer it in an error-free condition to the ultimate receiver.

In the frame structure according to figure 8a the 57th block is most advantageously allocated for the transfer of the unit identifier of each transmission unit. Each connect circuit can be instructed to transmit to the bus a programmable 8-bit identification code at the place of a certain block 57. Similarly the connect circuit can be set to monitor any unit identifier and to alert with the aid of an interrupt if an identifier is missing. The realisation enables a rapid error detection on the cross-connect device level, and a rapid reaction to errors, because the unit monitoring is based on interrupts regarding the software. A part of the time slots in block 57 are left empty if the cross-connect device doesn't have 32 connect circuits. These time slots can transfer other data relating to the testing of the operative status of the device, such as fixed or periodically changing test words providing a possibility to find out whether a data line of the cross-connect bus has been stuck in the state 1 or the state 0. Because a single transmission unit on its own is not responsible for the contents of the 57th block, it is not a real block in the same sense as the above presented first 56 blocks. It can be called a set of time slots, of which each can be processed independently of the other time slots.

The number of blocks (57) and the number of time slots in one block (36, except 32 in the last block) presented in figure 8a are not the only possible choices. In an alternative embodiment of the invention the frame structure comprises 54 blocks used for data transmission (cf. the blocks 1 to 56 in figure 8), of which each has 37 time slots: 32 time slots intended for the transmission of data bytes, four time slots reserved for later extensions, and one check sum time slot. Further the frame structure has a 55th block having 32 time slots and corresponding to the 57th block of figure 8a. In order to have a frame period of 125 µs at a bus clock of 16.384 MHz the frame structure further contains 18 empty clock periods between the last time slot of the 57th block and the first time slot of the first block.

In order to secure the compatibility between the cross-connect device and the transmission system regarding the interfaces and the frame structure of the cross-connect bus it is advantageous that a part (a block) of the cross-connect bus frame structure can be allocated for each input link so that the block has space for one information unit, such as a frame, used in the input link. Because E1 and T1 links of G.703/G.704 are the most common for the present it is advantageous that the size of the block in the frame structure of the cross-connect bus is approximately the same as the size of the E1 frame representing the frame with the higher capacity of the frames E1 and T1 of G.703/G.704. On the other hand, in future it can be seen that SDH connections may be taken into general use in the transmission systems so that one basic unit is the virtual container VC-12, where a multiframe unit transferring 30 or 31 channels at a rate of 64 kbit/s comprises four frames of 35 bytes each according to the recommendation ITU-T G.709. In the frame structure according to the invention each multiframe unit of such a virtual container VC-12 can be placed in one block of the cross-connect bus. A transmission unit realising an ATM interface can be allocated three blocks, which together can transfer two ATM cells of 53 bytes each.

When the cross-connect device is in operation each connect circuit continuously samples, at the rate of the master clock, the BFMS signal which it reads from the cross-connect bus. A certain 12-bit counter is reset when a change from the active to the deactivated state is detected in the BFMS status. Then the counter is incremented at the edge of each master clock pulse of the cross-connect bus. Thus a synchronisation is performed to the phase of the bus frame during each frame, whereby the effect of any random signal interference is limited to maximum one frame. The 6 least significant bits of the 12-bit counter indicate the current block and the 6 most significant bits indicate the byte. When the block counter reaches the value '110101', corresponding to the decimal number 53, it is reset at the edge of the next clock pulse, and at the same time the value of the 6 most significant bits is increased by one. Correspondingly, when the 6 least significant bits are '110010' (50 in the decimal system) and the 6 most significant bits are '100110' (38 in the decimal system) both counters are reset at the next clock period. Thus the frame counter keeps rotating at the correct pace, even if the frame marker would be lost on the bus.

Both the writing on the cross-connect bus and the reading from the cross-connect bus are based on this same counter. All data appearing on the bus is read into the data memory of the connect circuit. In the so called 16-bit implementation of the reading operation the connect circuit always gets two consecutive bytes into an intermediary register as one 16-bit word and then it writes this into the data memory at the address shown by the block and byte counters. In an alternative 8-bit implementation each byte appearing on the cross-connect bus is immediately written into the data memory. If the status of the block counter represents a block definition or CAS signalling definition of the circuit's receiver interface, then the respective time slot, or the CAS of the time slot, which was read from the buffer RAM determined by the byte counter of the respective interface, is sent on the bus. If the status of the block counter does not represent any block definition or CAS signalling definition of the circuit's receiver interface, then the output of the writing external buffer is kept in the high impedance mode.

A test transmitter and receiver can be combined in the connect circuit or elsewhere in the transmission unit, whereby the propagation of the test patterns generated by the test transmitter and receiver can be observed most advantageously both on the cross-connect bus and on the external transmission links. According to a preferred embodiment the test transmitter and receiver is an integral part of the connect circuit, and by a programmable setting they can be connected to any transmitter or receiver interface of the connect circuit. Most advantageously the test transmitter can be set to generate fixed 8-bit test words or any pseudo-random test pattern known per se, such as the patterns PRBS 15, PRBS20, QRSS defined in the standard 0.150 by ITU-T. Further the test operation of the test transmitter and of the transmitter or receiver interface connected to it can be most preferably selected so that it can relate to any time slot, any set of time slots, or even a whole 2.048 Mbit/s signal. Flip-flop circuit combinations known per se can be used to generate the test signals.

When it is desired to test the operation of the cross-connect bus, then data generated by the test transmitter is written in desired time slots into the buffer memory located at a receiver interface, instead of that data which has been received via the receiver interface. According to the normal operation of the connect circuit and the cross-connect bus said data is written into certain time slots of the cross-connect bus, from which the data is supplied to the data memories of the connect circuit of all transmission units connected to the cross-connect bus, and further the data is supplied - according to the cross-connection definitions given to the connect circuits - to certain transmitter interfaces. The transmitter interfaces which receive the test data may be located in the same connect circuit acting as the transmitter of the test data, and/or in a different connect circuit. When the test receiver of the connect circuit in question is connected to at least one such test transmitter interface it is possible to monitor whether the test data is transferred without errors on the cross-connect bus.

When the test receiver knows which kind of test data (fixed words or pseudo-random bit patterns) is transmitted by the test transmitter it initialises a certain set of flip-flop circuits used in the reception comparison, in the same way as the test transmitter generating the test data. By comparing the signal generated by the flip-flops to the received signal the test receiver is locked to the signal received by it, and then it begins to detect any errors found there, and a certain counter is used for calculating the errors. The counted should preferably be relatively large, for instance a 16-bit counter, so that the test arrangement can perform a long-term monitoring of random errors. If the pseudo-random bit patterns detect errors which can not be localised closer than to one time slot, then it is possible to begin to use fixed test word, with which even errors of one bit can be detected, such errors being caused for instance by a broken film or a breakdown in the motherboard acting as the physical structure of the cross-connect bus.

In an embodiment which has been found advantageous both the test transmitter and the receiver can be connected either to the transmitter interface or to the receiver interface. If it is desired to test a transmission link between two cross-connect devices, then in the first of them the test transmitter of a certain transmission unit is connected to the transmitter interface, from which the test data transmitted by it will replace the data coming from the cross-connect processor. In the second cross-connect device the test receiver in the transmission unit connected to the transmission link under test is connected to the receiver interface, whereby it receives the test signal transferred over the transmission connection. At the other end of the transmission link there may also be another device than the connect circuit of the transmission unit in the cross-connect device according to the invention, whereby it is particularly advantageous that the device according to the invention is arranged to use widely known, standardised test signals.

The above described use of a test transmitter and receiver is applicable both in a comprehensive testing made in connection with manufacturing and in testing during operation, which is of a monitoring and maintaining type. In the former case typically every transmitter and receiver interface as well as every time slot of the frame structure of the cross-connect bus are tested in a systematic way. In the latter case test bytes are generally transferred only in such time slots, which otherwise are unoccupied.

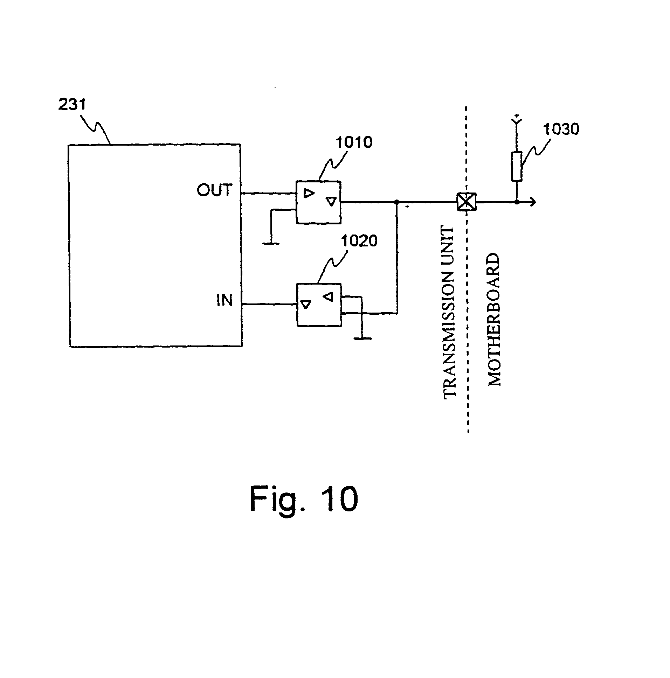

Above it was mentioned that the cross-connection is decentralised into different transmission units. As changes must be made now and then in a cross-connection, and as the changes must be operative simultaneously in the whole cross-connect device, it is advantageous to arrange a particular transmission link for this purpose between the transmission units. In this application said transmission link is called an internal communication bus. In an embodiment of the invention which has been found advantageous the link is realised by one line of the open-drain type which runs on the motherboard interconnecting the transmission units. Figure 10 shows how a transmission unit is connected to the internal communication bus via external buffer circuits 1010 and 1020, whereby the connect circuit 231 of the transmission unit sees the interface as two separate lines, the transmit line OUT and the receive line IN. The buffer circuits can be for instance of the type 74LVT125. Time division is applied in the operation of the internal communication bus so that several transmission units can use the same bus. If one frame period on the internal communication bus has the same length as one frame period on the cross-connect bus, then a common frame marker signal described above can be used for the frame alignment.

The frame of the internal communication bus can be divided for instance into 32 time slots, of which each represents a data transmission capacity of one byte, which again is divided into 8 bit time slots. One transmission unit is appointed master unit of the internal communication bus, whereby only it has the right to transmit instructions to the internal communication bus. Also the connect circuit of the transmission unit appointed as the master reads. The internal communication bus can have for instance the following tasks 1 to 4:
1. Change-over of the active cross-connect bus
   The transmission unit acting as the master transmits in the time slot 0 an 8-bit instruction, which tells which cross-connect bus to use (above we noted that the cross-connect bus is duplicated for reasons of security). Of course the time slot 0 is mentioned here only as an example. Each transmission unit of the cross-connect device receives the message and switches to use the told bus after a predetermined period, for instance exactly at the beginning of the next cross-connect bus frame.
2. Change-over of the active connection leading from the receiver interface to the cross-connect bus
   Each connect circuit has duplicated definitions about into which block of the frame structure of the cross-connect bus it shall write the data received via each receiver interface. The transmission unit acting as the master transmits in the time slot 2 an instruction to change the block definitions of the receive interfaces. Time slot 3 informs about which interfaces (1 to 8) shall have changed definitions. When each receiver has received the instruction from the internal communication bus it switches to use the standby block definition at the beginning of the next frame. Thus the block allocation of the cross-connect bus is simultaneously changed in the whole cross-connect device in a controlled manner.
3. Change-over of the active cross-connection table
   Above we noted that the control memory located in the connect circuit and storing the instructions which control the operation of the cross-connect processor included in each connect circuit also contains two tables, of which one is active and of which it is possible to make changes in the other. The transmission unit acting as the master transmits in the time slot 4 of the internal communication bus an instruction to change the cross-connection tables. The time slot 5 tells which transmitter interfaces (1 to 8) has to change tables. Each connect circuit switches to use the standby table after a predetermined period, for instance after two frames.
4. Branching of the asynchronous control bus in the directions master-slave and slave-master
   Information relating to the operative control of a base station network is often transferred on a so called asynchronous control bus having a relatively slow data transmission rate. Further it is generally necessary to add and copy data relating to the asynchronous control bus in the cross-connect devices of the base stations. The asynchronous control channel is treated in more detail in the Finnish patent application F1-A-973508. "Menetelmä ja laite ohjauskanavien sisällyttämiseksi tietovirtaan" (A method and a device for including control channels in the data flow) filed simultaneously with and having the same applicant as the present application. The connect circuit of the transmission unit acting as the master can in the time slot 6 of the internal communication bus transmit data coming from the data addition point of the asynchronous control bus to the internal communication bus. The number of bits to be used depends on the effective bit rate of the channels relating to the asynchronous control channel. The connect circuits of the transmission units in the slave-position receive the data and connect it to their own addition points of the asynchronous control bus. In the time slot 7 the transmission direction is the opposite.

In connection with changes relating to the cross-connection (for instance when new transmission units are added to the cross-connect device) the operation regarding the internal communication bus is as follows. When the equipment is otherwise ready to operate the definitions relating to the new cross-connection are transferred to the transmission units, in which the microprocessor controlling the operation of each transmission unit stores the definitions in the standby table of the data memory of the connect circuits and in a standby section in that memory which allocates certain blocks of the cross-connect bus to different receiver interfaces. Then the master unit transmits in one frame of the internal communication bus an instruction to change-over both the block definitions of the receiver interfaces and the cross-connection tables. If we here use predetermined the periods defined above in the paragraphs 1 and 3, then the block definitions are changed simultaneously in the whole system at the beginning of the next frame. At this moment it is not yet allowed to change tables, as the data memory of each connect circuit still contains data according to the previous block definitions. Therefore the change-over of the tables is delayed by one frame. Thus both operations occur at the same point regarding the data stream, and the change-over of the bus allocation will not be visible in any way outside the transmission device. The control arriving simultaneously at all transmission units via the internal communication bus also secures that, if for instance a fault is found in one transmission unit in the driver circuit writing to the cross-connect bus, the switch-over to the standby bus can be made so that there will be no bit errors in the traffic through units which originally were in good order.

The frequency values presented in the description as well as the periods derived from them, such as the length of a frame, the length of a time slot, and so on, are of course exemplary, and they should not be construed to be limiting regarding the invention.

## Claims

1. A method for data transmission between at least two transmission units in a cross-connect device comprising transmission units, the method comprising:
- providing the transmission units to perform interface matching between a transmission mode comprising frames and being used by an external transmission system, and an internal data communication mode of the cross-connect device, wherein the tansmission units are connected to a parallel bus interconnecting the transmission units **characterised in that** the method further comprising
a) a first transmission unit is allocated at least one whole block of the frame structure used on said parallel bus,
b) data, which is input to the cross-connect device and which represents an amount of data corresponding to one frame used by the external transmission system, is stored in said first transmission unit,
c) the data stored in step b) is written on said parallel bus during said at least one whole block allocated to said first transmission unit,
d) the data written in step c) is read from said parallel bus and stored in a second transmission unit in order to perform the cross-connection, and
e) interleaving by bytes the writting of blocks on said parallel bus in the step c).

2. A method according to claim 1, **characterised in that** it furher comprises the step:
synchronizing an operation of said parallel bus by a clock signal and a frame marker coveyed in a line of the bus between the transmission units.

3. A method according to claim 1, **characterised in that** it further comprises the step:
writing the data on said parallel bus one byte at the time so that one byte appears on said parallel bus during one clock period.

4. A method according to claim 1, **characterised in that** it further comprises steps, in which
- a check sum is calculated in said first transmission unit from the data written in a block of the frame structure of the parallel bus and from the code representing the position of said block in the frame structure, and said check sum is written into the same block of the frame structure of the parallel bus as said data to be written, and
- a check sum is calculated in said second transmission unit from the data being read from a block of the frame structure of the parallel bus and from the code representing the position of said block in the frame structure, and this check sum is compared with the check sum read from said block in order to check the validity of the data read from said block.

5. A method according to claim 1, **characterised in that** said first transmission unit converts the data it received from the external transmission system into sections with a size of a ITU-T G.703/G.704 E1 frame, and stores and writes to the parallel bus an amount of data corresponding to one ITU-T G.703/G.704 E1 frame during at least one whole block allocated to it.

6. A method according to claim 1, **characterised in that** for changing the cross-connection performed by the cross-connect device it comprises steps, in which
- the definitions of the changed cross-connection are transferred to all transmission units contained in the cross-connect device, and
- an instruction to apply the definitions regarding the changed cross-connection is given substantially simultaneously to all transmission units contained in the cross-connect device.

7. A cross-connect device for a base station in a cellular radio system, whereby the cross-connect device comprises transmission units, which are
- provided to perform the interface matching between a transmission mode comprising frames and used by an external transmission system and the internal transmission mode of the cross-connect device, and
- connected to a parallel bus interconnecting the transmission units, **characterised in that** the cross-connect device is arranged to use the method according to claim 1 for transferring data between the transmission units.

8. A cross-connect device according to claim 7, **characterised in that** the cross-connect device comprises a test transmitter in at least one transmission unit for transmitting predetermined test signals in any time slot of the frame structure of said cross-connect bus.

9. A base station comrpising the cross-connect device according to claim 7.

10. A base station network for a cellular radio system, whereby the base station network comprises a base station controller and at least one base station as well as a transmission system interconnecting the base stations, **characterised in that** the base station network comprises in said base station a cross-connect device which is arranged to use the method according to claim 7 for transferring data between the transmission units contained in the cross-connect device

## Patentansprüche

1. Verfahren zur Datenübertragung zwischen mindestens zwei Übertragungseinheiten in einer Kanalgruppenumsetzungsvorrichtung, die Übertragungseinheiten umfasst, wobei das Verfahren umfasst:
- Bereitstellen der Übertragungseinheiten, um eine Schnittstellenanpassung zwischen einem Übertragungsmodus, der Rahmen umfasst und von einem externen Übertragungssystem verwendet wird, und einem internen Datenkommunikationsmodus der Kanalgruppenumsetzungsvorrichtung durchzuführen, wobei die Übertragungseinheiten mit einem parallelen Bus verbunden sind, der die Übertragungseinheiten miteinander verbindet, **dadurch gekennzeichnet, dass** das Verfahren weiter umfasst
a) einer ersten Übertragungseinheit wird mindestens ein ganzer Block der Rahmenstruktur zugewiesen, die auf dem parallelen Bus verwendet wird,
b) Daten, die in die Kanalgruppenumsetzungsvorrichtung eingegeben werden und die eine Menge von Daten darstellen, welche einem von dem externen Übertragungssystem benutzten Rahmen entsprechen, werden in der ersten Übertragungseinheit gespeichert,
c) die in Schritt b) gespeicherten Daten werden auf den parallelen Bus während des mindestens einen ganzen Blocks geschrieben, welcher der ersten Übertragungseinheit zugewiesen ist,
d) die in Schritt c) geschriebenen Daten werden von dem parallelen Bus gelesen und in einer zweiten Übertragungseinheit gespeichert, um die Kanalgruppenumsetzung durchzuführen, und
e) byteweise Verschränken des Schreibens von Blöcken auf dem parallelen Bus in Schritt c).

2. Verfahren nach Anspruch 1, **dadurch gekennzeichnet, dass** es weiter den Schritt umfasst:
Synchronisieren eines Betriebs des parallelen Bus durch ein Taktsignal und eine Rahmenmarkierung, die in einer Leitung des Bus zwischen den Übertragungseinheiten übertragen werden.

3. Verfahren nach Anspruch 1, **dadurch gekennzeichnet, dass** es weiter den Schritt umfasst:
Schreiben der Daten auf den parallelen Bus Byte für Byte, so dass während einer Taktperiode ein Byte auf dem parallelen Bus auftritt.

4. Verfahren nach Anspruch 1, **dadurch gekennzeichnet, dass** es weiter Schritte umfasst, in denen:
- eine Prüfsumme in der ersten Übertragungseinheit aus den Daten berechnet wird, die in einen Block der Rahmenstruktur des parallelen Bus geschrieben wurden, und aus dem Code, der die Position des Blocks in der Rahmenstruktur darstellt, und die Prüfsumme in den gleichen Block der Rahmenstruktur des parallelen Bus geschrieben wird, wie die zu schreibenden Daten, und
- eine Prüfsumme in der zweiten Übertragungseinheit aus den Daten berechnet wird, die von einem Block der Rahmenstruktur des parallelen Bus gelesen werden, und aus dem Code, der die Position des Blocks in der Rahmenstruktur darstellt, und diese Prüfsumme mit der Prüfsumme verglichen wird, die aus dem Block gelesen wird, um die Gültigkeit der aus dem Block gelesenen Daten zu überprüfen.

5. Verfahren nach Anspruch 1, **dadurch gekennzeichnet, dass** die erste Übertragungseinheit die Daten, die sie von dem externen Übertragungssystem empfangen hat, in Abschnitte mit einer Größe eines ITU-T G.703/G.704 E1-Rahmens umwandelt, und eine Menge von Daten speichert und auf den parallelen Bus schreibt, die einem ITU-T G.703/G.704 E1-Rahmen entspricht, während mindestens einem ganzen ihr zugewiesenen Block.

6. Verfahren nach Anspruch 1, **dadurch gekennzeichnet, dass** es zum Ändern der Kanalgruppenumsetzung, die von der Kanalgruppenumsetzungsvorrichtung durchgeführt wird, Schritte umfasst, in denen
- die Definitionen der geänderten Kanalgruppenumsetzung auf alle Übertragungseinheiten übertragen werden, die in der Kanalgruppenumsetzungsvorrichtung enthalten sind, und
- eine Anweisung, die Definitionen bezüglich der geänderten Kanalgruppenumsetzung anzuwenden, im wesentlichen gleichzeitig an alle Übertragungseinheiten gegeben wird, die in der Kanalgruppenumsetzungsvorrichtung enthalten sind.

7. Kanalgruppenumsetzungsvorrichtung für eine Basisstation in einem zellularen Funksystem, wobei die Kanalgruppenumsetzungsvorrichtung Übertragungseinheiten umfasst, welche
- vorgesehen sind, die Schnittstellenanpassung zwischen einem Übertragungsmodus, der Rahmen umfasst und von einem externen Übertragungssystem verwendet wird, und dem internen Übertragungsmodus der Kanalgruppenumsetzungsvorrichtung durchzuführen, und
- mit einem parallelen Bus verbunden sind, der die Übertragungseinheiten miteinander verbindet, **dadurch gekennzeichnet, dass** die Kanalgruppenumsetzungsvorrichtung eingerichtet ist, das Verfahren nach Anspruch 1 zum Übertragen von Daten zwischen den Übertragungseinheiten zu verwenden.

8. Kanalgruppenumsetzungsvorrichtung nach Anspruch 7, **dadurch gekennzeichnet, dass** die Kanalgruppenumsetzungsvorrichtung einen Testsender in mindestens einer Übertragungseinheit umfasst, um vorbestimmte Testsignale in irgendeinem Zeitschlitz der Rahmenstruktur des Kanalgruppenumsetzungs-Bus zu übertragen.

9. Basisstation, welche die Kanalgruppenumsetzungsvorrichtung nach Anspruch 7 umfasst.

10. Basisstationsnetz für ein zellulares Funksystem, wobei das Basisstationsnetz einen Basisstationscontroller und mindestens eine Basisstation umfasst, sowie ein Übertragungssystem, welches die Basisstationen miteinander verbindet, **dadurch gekennzeichnet, dass** das Basisstationsnetz in der Basisstation eine Kanalgruppenumsetzungsvorrichtung umfasst, die eingerichtet ist, das Verfahren nach Anspruch 7 zu verwenden, um Daten zwischen den Übertragungseinheiten zu übertragen, die in der Kanalgruppenumsetzungsvorrichtung enthalten sind.

## Revendications

1. Procédé destiné à la transmission de données entre au moins deux unités de transmission dans un dispositif d'interconnexion comprenant des unités de transmission, le procédé comprenant ;
- la prévision des unités de transmission afin d'exécuter la correspondance d'interface entre un mode de transmission comprenant des trames et étant utilisé par un système de transmission externe, et un mode de communication de données interne du dispositif d'interconnexion, dans lequel les unités de transmission sont reliées à un bus parallèle reliant entre elles les unités de transmission **caractérisé en ce que** le procédé comprend en outre
a) l'attribution d'au moins un bloc entier de la structure de trame utilisée sur ledit bus parallèle à une première unité de transmission,
b) des données, qui sont délivrées en entrée au dispositif d'interconnexion et qui représentent une quantité de données correspondant à une trame utilisée par le système de transmission externe, sont stockées dans ladite première unité de transmission,
c) les données stockées à l'étape b) sont écrites sur ledit bus parallèle durant ledit au moins un bloc entier attribué à ladite première unité de transmission,
d) les données écrites à l'étape c) sont lues depuis ledit bus parallèle et stockées dans une deuxième unité de transmission afin d'exécuter l'interconnexion, et
e) l'entrelacement par des octets de l'écriture de blocs sur ledit bus parallèle à l'étape c).

2. Procédé selon la revendication 1, **caractérisé en ce qu'**il comprend en outre l'étape consistant à :
synchroniser une opération dudit bus parallèle grâce à un signal d'horloge et à un marqueur de trame transportés dans une ligne du bus entre les unités de transmission.

3. Procédé selon la revendication 1, **caractérisé en ce qu'**il comprend en outre l'étape consistant à :
écrire les données sur ledit bus parallèle un octet à la fois de sorte qu'un octet apparaisse sur ledit bus parallèle durant une période d'horloge.

4. Procédé selon la revendication 1, **caractérisé en ce qu'**il comprend en outre les étapes dans lesquelles
- une somme de contrôle est calculée dans ladite première unité de transmission à partir des données écrites dans un bloc de la structure de trame du bus parallèle et à partir du code représentant la position dudit bloc dans la structure de trame, et ladite somme de contrôle est écrite dans le même bloc de la structure de trame du bus parallèle que lesdites données à écrire, et
- une somme de contrôle est calculée dans ladite deuxième unité de transmission à partir des données lues à partir d'un bloc de la structure de trame du bus parallèle et à partir du code représentant la position dudit bloc dans la structure de trame, et cette somme de contrôle est comparée à la somme de contrôle lue à partir dudit bloc afin de vérifier la validité des données lues à partir dudit bloc.

5. Procédé selon la revendication 1, **caractérisé en ce que** ladite première unité de transmission convertit les données qu'elle a reçues du système de transmission externe en sections de la taille d'une trame ITU-T G.703/G.704 E1, et stocke et écrit dans le bus parallèle une quantité de données correspondant à une trame ITU-T G.703/G.704 E1 durant au moins un bloc entier attribué à celle-ci.

6. Procédé selon la revendication 1, **caractérisé en ce que**, pour modifier l'interconnexion exécutée par le dispositif d'interconnexion, il comprend les étapes dans lesquelles
- les définitions de l'interconnexion modifiée sont transférées à toutes les unités de transmission contenues dans le dispositif d'interconnexion, et
- une instruction destinée à appliquer les définitions concernant l'interconnexion modifiée est donnée de manière sensiblement simultanée à toutes les unités de transmission contenues dans le dispositif d'interconnexion.

7. Dispositif d'interconnexion pour une station de base dans un système radio cellulaire, grâce à quoi le dispositif d'interconnexion comprend des unités de transmission, qui sont
- prévues afin d'exécuter la correspondance d'interface entre un mode de transmission comprenant des trames et utilisé par un système.de transmission externe et le mode de transmission interne du dispositif d'interconnexion, et
- reliées à un bus parallèle reliant entre elles les unités de transmission, **caractérisé en ce que** le dispositif d'interconnexion est disposé pour utiliser le procédé selon la revendication 1 destiné à transférer des données entre les unités de transmission.

8. Dispositif d'interconnexion selon la revendication 7, **caractérisé en ce que** le dispositif d'interconnexion comprend un émetteur de test dans au moins une unité de transmission destiné à émettre des signaux de test prédéterminés dans n'importe quel intervalle de temps de la structure de trame dudit bus d'interconnexion.

9. Station de base comprenant le dispositif d'interconnexion selon la revendication 7.

10. Réseau de station de base pour un système radio cellulaire, grâce à quoi le réseau de station de base comprend un contrôleur de station de base et au moins une station de base ainsi qu'un système de transmission reliant entre elles les stations de base, **caractérisé en ce que** le réseau de station de base comprend un dispositif d'interconnexion dans ladite station de base qui est disposé afin d'utiliser le procédé selon la revendication 7 destiné à transférer des données entre les unités de transmission contenues dans le dispositif d'interconnexion.
